# FASCICULE DE BREVET EUROPEEN

(11) **EP 3 022 452 B1**
(45) Date de publication et mention de la délivrance du brevet: **02.01.2019**
(21) Numéro de dépôt: 13791845.4
(22) Date de dépôt: 10.10.2013
(51) Int. Cl.: F16B 33/06, B64D 45/02

(54) **FIXATION MÉTALLIQUE**
METALLBEFESTIGUNG
METAL ATTACHMENT

(30) Priorité: 19.07.2013 FR 1357157
(43) Date de publication de la demande: 25.05.2016
(73) Titulaire: LISI Aerospace, 75012 Paris (FR)
(72) Inventeur: REGNARD, Benoît, F-78640 Saint Germain de La Grange (FR); GOYER, Julien, F-95210 Saint Gratien (FR); BROUCKE, Martial, F-60240 DELINCOURT (FR)
(74) Mandataire: Ipside
(86) Numéro de dépôt international: PCT/FR2013/052427
(87) Numéro de publication internationale: WO 2015/007957

(56) Documents cités:
- WO-A1-2010/088647
- WO-A1-2011/050040
- DE-A1-102010 040 338
- DE-U1-202006 008 314
- FR-A1- 2 215 453
- GB-A- 2 212 580
- US-A- 2 518 468
- US-A- 3 407 903

## Description

La présente invention se rapporte à une fixation métallique à revêtement lubrifiant partiel. Le domaine technique de l'invention est d'une façon générale celui des fixations. Plus particulièrement, l'invention concerne des vis, des fixations à gorges de sertissage et toute autre fixation métallique destinée à assembler des éléments de structure, par exemple d'appareil de type aéronef préalablement alésés. De telles fixations sont généralement réalisées à partir d'un matériau métallique de type acier inoxydable ou alliage de titane.

La nouvelle génération d'avions utilise une structure en matériau composite qui a l'avantage d'alléger de manière significative la masse de l'avion et de ne pas être sensible au phénomène de fatigue. Cependant, contrairement à une structure métallique, les matériaux composites présentent l'inconvénient de mal conduire l'électricité et posent des problèmes de résistance aux impacts de foudre. Afin de résister à la foudre, il est nécessaire de combler tout jeu qui existerait entre le dispositif de fixation et l'alésage pour empêcher un claquage de l'air.

Dans l'état de la technique, on connaît l'enseignement du document WO 2011/050040 qui divulgue des dispositifs de fixation chemisés installés en interférence dans des matériaux composites. L'interférence est définie par l'installation d'un dispositif de fixation comportant un diamètre extérieur supérieur au diamètre d'alésage qui va le recevoir, ce qui amène une expansion de l'alésage durant l'installation du dispositif. La fixation comprend une tige comprenant un revêtement lubrifiant sur la portion filetée et sur une portion de transition entre le fût droit et la portion filetée, afin de faciliter l'insertion de la tige dans la chemise. L'inconvénient de cette fixation est de ne comprendre que très peu de revêtement lubrifiant sur le fût, ce qui peut nécessiter de très importants d'efforts d'installation du dispositif de fixation.

En effet, plus l'épaisseur des structures à assembler est grande, plus les efforts d'insertion d'un dispositif de fixation installé en interférence sont grands. Ils peuvent dépasser l'effort maximal d'installation de la fixation au-delà duquel la fixation casse, soit au niveau des filets, soit au niveau d'une gorge de traction, soit au niveau de l'outillage d'installation.

On connaît également l'enseignement du document GB 2 212 580 qui divulgue une fixation métallique non chemisée installée dans une structure de matériaux composites. Cette fixation comprend sur une portion de son fût un revêtement lubrifiant - de type TEFLON™ ou MoS₂ - diélectrique permettant l'insertion de la fixation dans l'alésage. La portion du fut raccordée à la tête, en appui sur une surface extérieure de la structure de l'aéronef, qui peut être frappée par la foudre, est laissée nue afin de permettre aux courants électriques de passer de la tête de la fixation dans la structure de l'aéronef via la portion de fût métallique nu, et donc conducteur. L'inconvénient de cette fixation est de présenter une seule portion conductrice placée arbitrairement près de la tête, ce qui impose que la structure adjacente soit relativement conductrice, ou comprenne un treillis métallique conducteur. Le document DE 20 2006 008 314 U divulgue une autre fixation de l'art antérieur.

Un objectif de la présente demande est de résoudre les problèmes des fixations de l'art antérieur précité. Un objectif de l'invention est d'obtenir une fixation apte à conduire l'électricité dans toutes les couches d'une structure comportant au moins une couche peu conductrice lorsque l'élément est frappé par la foudre, sans nécessiter de trop importants efforts d'installation.

L'invention a donc pour objet une fixation métallique comprenant une tête élargie et un fût lisse s'étendant selon un axe de révolution, le fût comprenant au moins une portion conductrice et une portion lubrifiante disposées continûment selon l'axe de révolution de la fixation.

La fixation selon l'invention permet d'assurer une surface de contact électrique sur tous les éléments de structure à assembler - qu'ils soient conducteurs ou peu conducteurs - quelle que soit la composition de la structure, en fonction des dimensions des bandes conductrices. La fixation peut donc être installée dans n'importe quelle structure, sans nécessiter une couche conductrice à un endroit spécifique.

La fixation selon l'invention peut être installée dans des structures constituées totalement de matériaux composites, ou dans des structures mixtes c'est à dire utilisant des matériaux composites et métalliques du type alliage d'aluminium ou de titane par exemple. Dans ces deux cas, l'insertion de la fixation selon l'invention peut être réalisée en interférence dans une chemise métallique préalablement disposée dans un alésage des structures, afin d'éviter tout risque de délaminage du composite lors de l'installation de la fixation, et de combler toutes les poches d'air qui pourraient exister entre la structure et le dispositif de fixation.

La fixation de l'invention peut également être installée dans des structures uniquement métalliques du type aluminium ou titane par exemple.

La fixation selon l'invention peut comprendre une ou plusieurs des caractéristiques suivantes :
- les portions conductrices et lubrifiantes sont disposées parallèlement à l'axe de révolution de la fixation,
- au moins deux bandes lubrifiantes sont disposées diamétralement opposées par rapport à l'axe de révolution de la fixation,
- les portions conductrices et lubrifiantes sont disposées en hélice autour de l'axe de révolution de la fixation,
- la portion conductrice est une portion de métal nu, ou une portion de métal nu recouverte d'une couche conductrice d'électricité,
- la portion lubrifiante est un film solide lubrifiant ou un revêtement de résine organique comprenant des pigments d'aluminium,
- le fût de la fixation est cylindrique ou conique,
- la fixation comprend en outre une chemise métallique dont un diamètre intérieur est inférieur à un diamètre extérieur du fût de la fixation,
- la portion de blocage est un filetage ou une pluralité de gorges de sertissage.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1A : une représentation schématique d'une vue en bout d'un premier exemple de fixation selon l'invention ;
- figure 1B : une représentation schématique d'une vue de côté d'un premier exemple de fixation selon l'invention ;
- figure 2A : une représentation schématique d'une vue en bout d'un deuxième exemple de fixation selon l'invention ;
- figure 2B : une représentation schématique d'une vue de côté d'un deuxième exemple de fixation selon l'invention ;
- figure 3A : une représentation schématique d'une vue en bout d'un troisième exemple de fixation selon l'invention ;
- figure 3B : une représentation schématique d'une vue de côté d'un troisième exemple de fixation selon l'invention ;
- figure 4 : une représentation schématique d'une vue de coté d'un quatrième exemple de fixation selon l'invention.

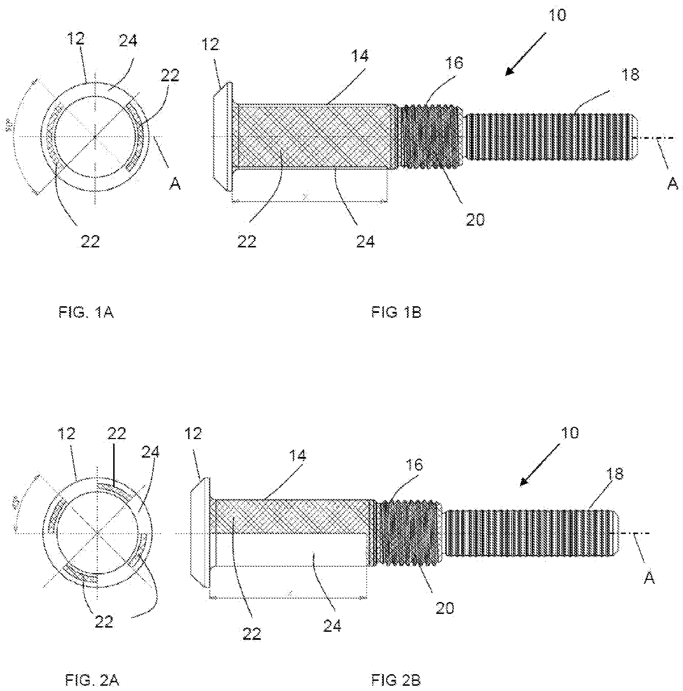

Les figures 1A et 1B représentent de manière schématique un premier exemple de réalisation de fixation selon l'invention. La figure 1B représente une fixation métallique 10, par exemple en alliage de titane TiA6V, comprenant une tête élargie 12 protubérante, un fût lisse 14 cylindrique et une portion de blocage 16 sous la forme d'un filetage sur lequel un écrou (non représenté) peut être vissé. La fixation comprend de plus une queue de traction 18 permettant de tirer sur la tige pour l'insérer dans une structure préalablement alésée. Cette queue 18 peut être une partie intégrale de la tige 10, ou amovible au moyen d'une extrémité filetée insérée dans une extrémité taraudée réalisée à l'intérieur de la portion filetée 16. Cette queue de traction est facultative, et peut être omise.

Le fût lisse 14, destiné à venir en contact avec une structure réalisée d'un ou plusieurs matériaux, métalliques ou en matériaux composites, est nu. De préférence, il est oxydé par anodisation sulfurique pour améliorer la résistance à la corrosion galvanique. La portion filetée 16 est entièrement revêtue d'une couche de lubrifiant 20, permettant d'éviter le grippage de l'écrou lors de son installation. Le fût lisse comprend également deux portions 22 de revêtement lubrifiant, disposées sous forme de bandes parallèles à l'axe de révolution A de la fixation. Chaque portion lubrifiante 22 s'étend sur le fût lisse 14 et une portion sous la tête 12. Les deux bandes lubrifiantes 22 sont disposées de manière diamétralement opposés par rapport à l'axe de révolution A, avec un angle de 90° entre chaque bande comme représenté en figure 1A. Les surfaces 24 de fût 14 laissées entre les bandes lubrifiantes 22 sont conductrices, et s'étendent sur une longueur X de fût 14. Dans cet exemple, le fût 14 présente 50% de surface de contact lubrifié et 50% de surface conductrice d'électricité. Les portions conductrices 24 étant disposées parallèlement à l'axe de révolution A, la conduction est assurée quelle que soit la composition de la structure dans laquelle la fixation est insérée. Les portions lubrifiantes 22 permettent d'assurer une lubrification minimum du fût lisse 14 sur toute sa hauteur de sorte que la fixation puisse être installée sans exiger d'effort trop important et sans risquer de casser la fixation.

Le lubrifiant utilisé pour recouvrir le filetage 16 et les portions lubrifiantes 22 peut être un film solide lubrifiant, de type MoS₂, ou plus généralement conforme à la norme SAE AS5272. Le lubrifiant peut également être une résine organique à pigments d'aluminium, comme le revêtement HI-KOTE™ 1 ou HI-KOTE™ 1NC commercialisé par Hi-Shear Corp. à Torrance, Californie. Ce type de revêtement est par exemple décrit dans les brevets US 3 983 304 ou EP2 406 336. Le lubrifiant peut également être du type décrit dans la norme NAS4006. Le lubrifiant est déposé sur une épaisseur de 5 à 13 µm, par exemple par pulvérisation. La tige peut être recouverte d'une deuxième couche de lubrifiant, par exemple de l'alcool céthylique. Cette deuxième couche facilite l'insertion de la fixation dans la structure, et est enlevée au fur et à mesure de l'installation car elle adhère très peu à la surface.

Les figures 2a et 2b représentent la même fixation 10 que celle décrite en référence aux figures 1A et 1B. La seule différence réside dans le nombre de portions lubrifiantes 22 appliquées sur le fût 14 lisse. Dans ces figures, le fût 14 est recouvert de quatre portions lubrifiantes 22, disposées de manière diamétralement opposés par rapport à l'axe de révolution A, avec un angle de 45° entre chaque bande comme représenté en figure 2A. Dans cet exemple, la surface totale conductrice de bandes conductrices 24 représente 50% de la surface de contact entre le fût de la fixation et la structure.

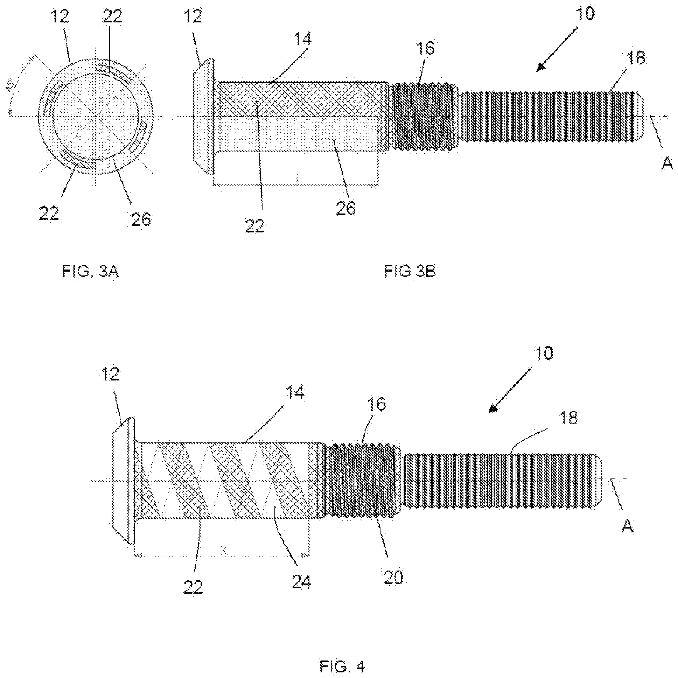

Les figures 3a et 3b représentent la même fixation 10 que celle décrite en référence aux figures 1A et 1B. La différence réside dans le fait que la fixation est entièrement recouverte d'une première couche conductrice 26, et comprend deux portions lubrifiantes 22 appliquées sur la première couche métallique 26. La couche conductrice 26 permet d'améliorer la conduction électrique entre la fixation 10 et la structure. Elle peut être réalisée sous la forme d'un dépôt métallique d'aluminium, ou d'un revêtement organique conducteur.

La figure 4 représente un quatrième exemple de réalisation de l'invention. La fixation est identique à celle décrite en référence aux figures 1A et 1B. La différence réside dans le fait que la portion lubrifiante 22 est réalisée sous la forme d'une hélice s'enroulant autour de l'axe de révolution A de la fixation 10. La portion conductrice 24 est également hélicoïdale.

L'invention n'est bien sûr pas limitée aux exemples donnés ci-dessus et la fixation peut varier dans ses formes et/ou les matériaux employés. Ainsi, le nombre de portions lubrifiantes 22 peut varier, et la proportion de surface recouverte peut également varier en fonction des performances attendues de la fixation. Une proportion de surface conductrice de 50% de la surface de contact entre le fût de la fixation et la structure est préférable, mais cette proportion peut varier entre 20% et 80% de la surface de contact entre le fût de la fixation et la structure. La longueur X peut varier, et ne recouvrir qu'une partie du fût lisse 14, la largeur des portions conductrices 24 et lubrifiantes 22 devant être adaptées en fonction de la proportion de surface totale conductrice désirée. La portion sous la tête peut également ne pas être recouverte de lubrifiant.

En variante, la portion de blocage 16 peut être constituée de gorges de sertissages, sur lesquelles une bague métallique est sertie. Dans ce cas, la lubrification de cette portion n'est pas nécessaire.

Le fût lisse 14 peut être conique, et installé soit dans un perçage conique, soit dans une chemise dont la surface intérieure est conique et la surface extérieure est cylindrique, afin que l'ensemble soit installé dans un perçage cylindrique, plus facile à réaliser qu'un perçage conique. Lorsque le dispositif de l'invention est utilisé avec une chemise, celle-ci comprend un diamètre intérieur inférieur à un diamètre extérieur du fût de la fixation afin que la fixation, lors de son insertion, dilate radialement la chemise contre les parois du perçage réalisé dans la structure. Cette variante est particulièrement adaptée aux structures comprenant au moins une couche de matériau composite.

La tête 12 de la fixation peut être fraisée et s'adapter dans une fraisure complémentaire réalisée dans la structure.

## Revendications

1. Fixation métallique (10) comprenant une tête (12) élargie et un fût lisse (14) destiné à venir en contact serré avec une structure et s'étendant selon un axe de révolution (A), **caractérisée en ce qu'**une surface du fût lisse (14) comprend une alternance, sur un pourtour dudit fût lisse, d'au moins une portion conductrice (24) et d'au moins une portion lubrifiante (22), ladite au moins une portion conductrice s'étendant sur une longueur X axiale du fût lisse (14) inférieure ou égale à la longueur dudit fût lisse et ladite au moins une portion lubrifiante s'étendant sur au moins la longueur dudit fût lisse, ladite portion lubrifiante étant constituée d'un revêtement lubrifiant (20) déposé sur au moins une portion du fût lisse.

2. Fixation métallique (10) selon la revendication 1, **caractérisée en ce que** la au moins une portion conductrice (24) recouvre entre 20% et 80% de la surface du fût lisse (14) en contact avec la structure lorsque la fixation (10) est installée.

3. Fixation métallique (10) selon la revendication 1 ou la revendication 2, **caractérisée en ce que** la surface du fût lisse (14) comprend une deuxième couche d'un lubrifiant à faible adhérence recouvrant une tige de la fixation (10) et destinée à être enlevée au fur et à mesure de l'installation de ladite fixation.

4. Fixation métallique (10) selon l'une quelconque des revendications précédentes, dans laquelle les portions conductrice (22) et lubrifiante (24) sont disposées parallèlement à l'axe de révolution de la fixation (A).

5. Fixation métallique selon la revendication 4, dans laquelle au moins deux portions lubrifiantes (22) sont disposées diamétralement opposées par rapport à l'axe de révolution de la fixation (A).

6. Fixation métallique (10) selon l'une quelconque des revendications 1 à 3, dans laquelle les portions conductrice (24) et lubrifiante (22) sont disposées en hélice autour de l'axe de révolution de la fixation (A).

7. Fixation métallique (10) selon l'une quelconque des revendications 1 à 3, dans laquelle la portion conductrice (24) est une portion de métal nu, ou une portion de métal nu recouverte d'une couche conductrice d'électricité (26).

8. Fixation métallique (10) selon l'une quelconque des revendications 1 à 3, dans laquelle la portion lubrifiante (22) est une portion du fût lisse (14) recouverte d'un film solide lubrifiant ou d'un revêtement de résine organique comprenant des pigments d'aluminium.

9. Fixation métallique (10) selon l'une quelconque des revendications 1 à 3, dans laquelle le fût (14) est cylindrique ou conique.

10. Fixation métallique (10) selon l'une quelconque des revendications 1 à 3, comprenant en outre une chemise métallique dont un diamètre intérieur est inférieur à un diamètre extérieur du fût de la fixation.

11. Fixation métallique (10) selon l'une quelconques des revendications 1 à 3, dans laquelle la portion de blocage (16) comprend un filetage ou des gorges de sertissage.

## Patentansprüche

1. Metallbefestigung (10), umfassend einen erweiterten Kopf (12) und einen glatten Schaft (14), der dazu vorgesehen ist, in engem Kontakt mit einer Struktur zu treten und sich gemäß einer Drehachse (A) erstreckt, **dadurch gekennzeichnet, dass** eine Oberfläche des glatten Schafts (14) auf einem Umfang des glatten Schafts eine Abfolge von mindestens einem leitfähigen Abschnitt (24) und mindestens einem gleitfähigen Abschnitt (22) umfasst, wobei der mindestens eine leitfähige Abschnitt sich auf einer axialen Länge X des glatten Schafts (14) erstreckt, die kleiner oder gleich der Länge des glatten Schafts ist und der mindestens eine gleitfähige Abschnitt sich auf mindestens der Länge des glatten Schafts erstreckt, wobei der gleitfähige Abschnitt aus einer gleitfähigen Beschichtung (20), die auf mindestens einem Abschnitt des glatten Schafts aufgetragen ist, besteht.

2. Metallbefestigung (10) nach Anspruch 1, **dadurch gekennzeichnet, dass** der mindestens eine leitfähige Abschnitt (24) zwischen 20 % und 80 % der Oberfläche des glatten Schafts (14) bedeckt, der in Kontakt mit der Struktur steht, wenn die Befestigung (10) installiert ist.

3. Metallbefestigung (10) nach Anspruch 1 oder Anspruch 2, **dadurch gekennzeichnet, dass** die Oberfläche des glatten Schafts (14) eine zweite Schicht eines Gleitmittels mit geringer Haftung umfasst, das einen Stiel der Befestigung (10) bedeckt und dazu vorgesehen ist, bei Installation der Befestigung schrittweise entfernt zu werden.

4. Metallbefestigung (10) nach einem der vorstehenden Ansprüche, wobei der leitfähige (22) und der gleitfähige (24) Abschnitt parallel zur Drehachse der Befestigung (A) angeordnet sind.

5. Metallbefestigung (10) nach Anspruch 4, wobei mindestens zwei gleitfähige Abschnitte (22) in Bezug auf die Drehachse der Befestigung (A) diametrisch gegenüberliegend angeordnet sind.

6. Metallbefestigung (10) nach einem der Ansprüche 1 bis 3, wobei der leitfähige (24) und der gleitfähige (22) Abschnitt spiralförmig um die Drehachse der Befestigung (A) angeordnet sind.

7. Metallbefestigung (10) nach einem der Ansprüche 1 bis 3, wobei der leitfähige Abschnitt (24) ein Abschnitt aus blankem Metall ist oder ein Abschnitt aus blankem Metall, der mit einer elektrisch leitfähigen Schicht (26) bedeckt ist.

8. Metallbefestigung (10) nach einem der Ansprüche 1 bis 3, wobei der gleitfähige Abschnitt (22) ein Abschnitt des glatten Schafts (14) ist, der von einem stabilen gleitfähigen Film oder einer Beschichtung aus organischem Harz, das Aluminiumpigmente umfasst, bedeckt ist.

9. Metallbefestigung (10) nach einem der Ansprüche 1 bis 3, wobei der Schaft (14) zylindrisch oder konisch ist.

10. Metallbefestigung (10) nach einem der Ansprüche 1 bis 3, weiter umfassend eine metallische Ummantelung, bei der ein Innendurchmesser kleiner als ein Außendurchmesser des Schafts der Befestigung ist.

11. Metallbefestigung (10) nach einem der Ansprüche 1 bis 3, wobei der Sperrabschnitt (16) ein Gewinde oder Crimp-Rillen umfasst.

## Claims

1. Metal attachment (10) comprising an enlarged head (12) and a smooth shaft (14) intended to come into close contact with a structure and extending along an axis of revolution (A), **characterised in that** a surface of the smooth shaft (14) comprises a rotation, around a perimeter of said smooth shaft, at least one conductive portion (24) and at least one lubricating portion (22), said at least one conductive portion extending along an axial length X of the smooth shaft (14), less than or equal to the length of said smooth shaft and said at least one lubricating portion extending along at least the length of said smooth shaft, said lubricating portion being constituted of a lubricating coating (20) deposited on at least one portion of the smooth shaft.

2. Metal attachment (10) according to claim 1, **characterised in that** the at least one conductive portion (24) covers between 20% and 80% of the surface of the smooth shaft (14) in contact with the structure when the attachment (10) is installed.

3. Metal attachment (10) according to claim 1 or claim 2, **characterised in that** the surface of the smooth shaft (14) comprises a second layer of a low-adhesion lubricant covering a rod of the attachment (10) and intended to be gradually removed from the installation of said attachment.

4. Metal attachment (10) according to any one of the preceding claims, wherein the conductive (22) and lubricating (24) portions are arranged parallel to the axis of revolution of the attachment (A).

5. Metal attachment according to claim 4, wherein at least two lubricating portions (22) are arranged diametrically opposite, with respect to the axis of revolution of the attachment (A).

6. Metal attachment (10) according to any one of claims 1 to 3, wherein the conductive (24) and lubricating (22) portions are arranged helically around the axis of revolution of the attachment (A).

7. Metal attachment (10) according to any one of claims 1 to 3, wherein the conductive portion (24) is a bare metal portion, or a portion of bare metal covered with an electrically-conductive layer (26).

8. Metal attachment (10) according to any one of claims 1 to 3, wherein the lubricating portion (22) is a portion of the smooth shaft (14) covered with a solid, lubricating film or an organic resin coating comprising aluminium pigments.

9. Metal attachment (10) according to any one of claims 1 to 3, wherein the shaft (14) is cylindrical or conical.

10. Metal attachment (10) according to any one of claims 1 to 3, further comprising a metal jacket of which a lower diameter is less than an outer diameter of the shaft of the attachment.

11. Metal attachment (10) according to any one of claims 1 to 3, wherein the blocking portion (16) comprising a thread or crimping recesses.
